# EUROPEAN PATENT APPLICATION

(11) **EP 4 807 830 A1**
(43) Date of publication of application: **16.09.2026**
(21) Application number: 25163793.0
(22) Date of filing: 14.03.2025
(51) Int. Cl.: H01M 10/04, H01M 50/264, H01M 50/289, H01M 50/242, H01M 50/211, H01M 50/209

(54) **A BATTERY PACK**

(71) Applicant: Ioncor Oy, 23500 Uusikaupunki (FI)
(72) Inventor: MATTILA, Pekka, 23500 Uusikaupunki (FI); HIETAKANGAS, Janne, 23500 Uusikaupunki (FI); MÄKI, Jouni, 23500 Uusikaupunki (FI)
(74) Representative: Papula Oy

(57) **Abstract**

A battery pack, comprising a housing (1) providing a cell stack room (2) having a first interior surface (3) and a second interior surface (4) opposite the first interior surface. A cell stack (5) is arranged in the cell stack room (2) between the first and the second interior surfaces (3, 4). The cell stack (5) comprises a plurality of battery cells (6) arranged in a stack extending in an X axis. The X axis is at least substantially parallel with the first and the second interior surfaces (3, 4). The cell stack (5) is attached by an adhesive layer (7) to the first interior surface and the second interior surface.

## Description

### BACKGROUND

The invention relates to a battery pack.

Energy density of battery system structures is a central issue in electric vehicle development to have lighter, more compact, and economic solutions.

### BRIEF DESCRIPTION

Viewed from a first aspect, there can be provided a battery pack, comprising a housing, providing a cell stack room having a first interior surface and a second interior surface opposite the first interior surface, a cell stack arranged in the cell stack room between the first and the second interior surfaces, the cell stack comprising a plurality of battery cells arranged in a stack extending in an X axis, the X axis is at least substantially parallel with the first and the second interior surfaces, wherein the cell stack plurality of battery cells is attached by an adhesive layer to the first interior surface and the second interior surface.

Thereby a battery pack having high energy density and simplified structure may be achieved.

The battery pack is characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

Various embodiments of the first aspect may comprise at least one feature from the following paragraphs:
In one embodiment, the battery cell has a prismatic shape.

An advantage is that a very high energy density in the battery pack may be achieved, since prismatic battery cells can be mounted close to each other without empty spaces therebetween.

In one embodiment, the battery cell is a pouch cell.

An advantage is that a very light structure of the cell stack may be achieved.

In one embodiment, the cell stack comprises cell pads arranged alternatively with the battery cells.

An advantage is that the cell pads may make the cell stacks compressible and allow space for tolerance management when assembling the cell stacks into the housing.

In one embodiment, the cell stack room is arranged for carrying the battery cells and controlling cell swelling forces.

An advantage of this structure, often called as "cell-to-pack", is that a separate cell stack frame may be excluded, which may lighten the structure of the battery pack, raise the energy density thereof and simplify the assembly of the battery pack.

In one embodiment, the cell stack is provided with a cell stack frame arranged for carrying the battery cells and controlling cell swelling forces.

An advantage is that the structure of the housing may be lightened, since it needs not to carry the battery cells and control cell swelling forces.

In one embodiment, the adhesive layer comprises at least one of the following adhesives: epoxy, polyurethane, such as two-component polyurethane, methyl methacrylate, and silicone.

An advantage is that good adhesive properties, such as tensile strength and shear strength, may be provided in combination with at least appropriate thermal conductivity.

In one embodiment, the tensile strength of the adhesive material is at least 0,5 MPa, preferably at least 0,8 MPa, more preferably at least 1,0 MPa.

An advantage is that at least a sufficient attachment of the cell stack to the interior surface may be achieved.

In one embodiment, the shear strength of the adhesive material is at least 1,0 MPa.

An advantage is that a strong attachment between the cell stack and the cell stack room may be achieved.

In one embodiment, the viscosity of the adhesive material in its dispensing phase is in range of 1 - 6 Pa **s.**

An advantage is that a high flow rates and quick dispensing process may be achieved.

In one embodiment, the dielectric strength of hardened adhesive material is at least 4 kV/mm.

An advantage is that electrical breakdowns may be prevented.

In one embodiment, the dielectric strength of hardened adhesive material is at least 15 kV/mm, preferably at least 20 kV/mm.

An advantage is that electrical breakdowns may be prevented also in assembly of the battery pack when the adhesive material is not yet hardened or cured.

In one embodiment, the adhesive layer comprises plurality of layers of different materials along a Z axis that extends through the height of the cell stack.

An advantage is that properties of the adhesive layer may be tailored according to needs of the battery pack.

In one embodiment, the housing comprises a plurality of parallelly arranged cell stack rooms, and a fin arranged between two cell stack rooms.

An advantage is that the fin may provide interior surfaces for attaching two cell stacks to the housing.

In one embodiment, at least one of the first interior surface and the second interior surface is provided with an aperture that is connected to a hole extending to one edge of a structure creating the corresponding interior surface.

An advantage is that material(s) for creating the adhesive layer may be dispensed through the aperture and the hole in the gap between the cell stack and the interior surface, thus risks that the battery cells are damaged by dispensing means may be eliminated or at least minimized. A further advantage is that the gap may be dimensioned narrower, since there is no need for receiving any dispensing means therein.

In one embodiment, the hole comprises a screw thread.

An advantage is that the hole may further be utilized in assembling the battery pack.

In one embodiment, the first and the second interior surface comprise a draft angle such that distance of said first and second interior surfaces increases along the Z axis.

An advantage is that less adhesive material is needed as the gap narrows, and thus a less expensive and lighter structure may be achieved.

In one embodiment, at least one of the first and the second interior surfaces comprises two draft angles such that distance of said first and second interior surfaces increases from the middle of the height of the said interior surfaces cell stack room towards both ends of said interior surfaces.

An advantage is that the interior surface may create a surface that is wedge-shaped in two opposing directions of the Z axis, which may enhance the attachment between said interior surface and the cell stack. Furthermore, a more compact structure between said interior surface and the cell stack may be achieved, and thus higher energy density in the battery pack.

In one embodiment, the bottom of the battery cell is in contact with a cooling element arranged under the cell stack(s).

An advantage is that cooling of the battery cells may take place through the bottom thereof, and it is not necessary to cool them through sides thereof. Furthermore, as the battery stack is attached to the interior surfaces, the structure of the cooling element arranged under the cell stack(s) may be light and thin, thus higher energy density in the battery pack may be achieved.

Based on the above mentioned, it should be noted that different embodiments mentioned in the above paragraphs may combined in any possible suitable manner for implementing the present invention.

### BRIEF DESCRIPTION OF FIGURES

Some embodiments illustrating the present disclosure are described in more detail in the attached drawings, in which
Figure 1 is a schematic perspective view of a battery pack,
Figure 2 is a schematic perspective view of a battery pack shown in Figure 1 in partial cross-section,
Figure 3 is a schematic perspective view of a cell stack,
Figure 4 is a schematic view of a part of a battery pack in partial cross-section,
Figure 5a is a schematic perspective view of a part of a battery pack in partial cross-section,
Figure 5b is a schematic side view of a detail of the battery pack shown in Figure 5a in partial cross-section,
Figure 6a is a schematic side view of a part of a battery pack in partial cross-section,
Figure 6b is a schematic perspective view of a detail of the battery pack shown in Figure 6a in partial cross-section, and
Figure 7 is a schematic view of a part of a battery pack in partial cross-section.

In the figures, some embodiments are shown simplified for the sake of clarity. Similar parts are marked with the same reference numbers in the figures.

### DETAILED DESCRIPTION

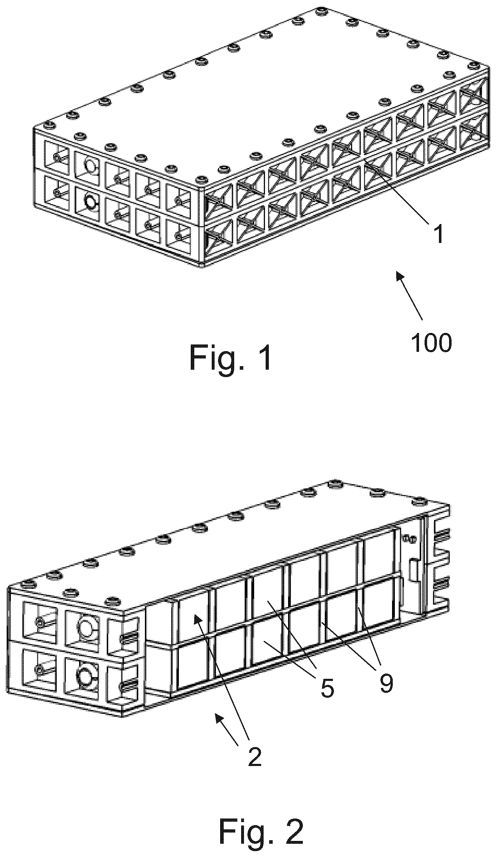

**Figure** 1 is a schematic perspective view of a battery pack, and **Figure** 2 is a schematic perspective view of a battery pack shown in Figure 1 in partial cross-section.

According to an embodiment, the battery pack 100 is a complete set of battery cells of a device, such as an industrial apparatus, or a vehicle, such as an electric car or a hybrid car. The battery pack 100 may further comprise other necessary elements to operate the battery cells of the device.

The battery pack may comprise a housing 1 wherein one or more cell stacks 5 are accommodated.

The housing comprises a required number of cell stack room(s) 2, wherein the cell stack 5 may be disposed within the stack room 2. In the embodiment shown in Figure 2 there are twelve cell stack rooms 2.

In one embodiment, the housing 1 comprises a plurality of parallelly arranged cell stack rooms 2, and a fin 9 therebetween for separating said two cell stack rooms 2.

The cell stack room 2 has a first interior surface 3 and a second interior surface 4 opposite the first interior surface as shown in the following Figures. The cell stack 5 is arranged in the cell stack room 2 between the first and the second interior surfaces 3, 4.

In one embodiment, the housing 1 is for example, a rigid die cast housing or welded structure. Housing material may be based on at least one of the following: steel, aluminum alloy, polymer like plastic or cellulose, or composite material comprising, but not limited to glass fiber, carbon fiber, graphite, wood, and/or aramid fiber.

In one embodiment, such as shown in Figure 2, the housing comprises cell stack rooms 2 arranged in plurality of layers, The embodiment shown in Figure 2 comprises two layers of cell stack rooms 2. It is to be noted, however, that in some embodiments the housing 1 comprises cell stack rooms 2 that are arranged in one layer only.

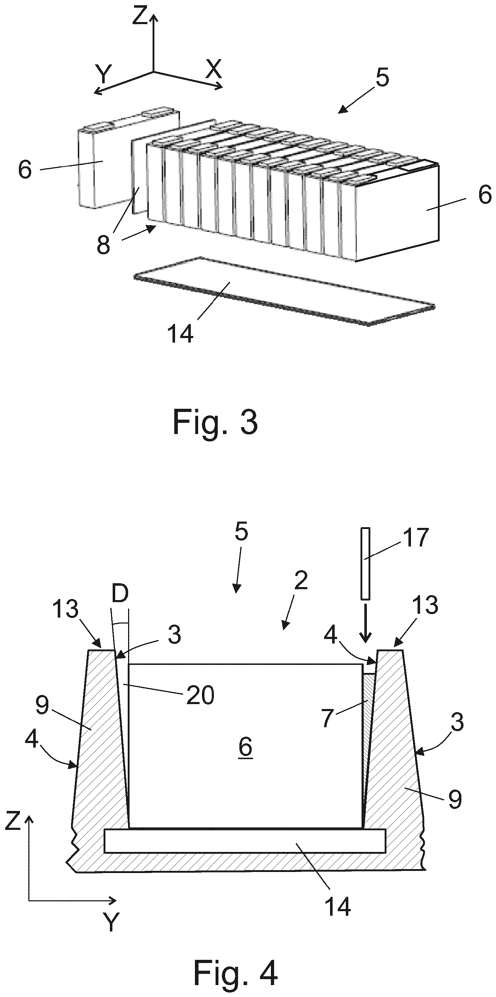

**Figure** 3 is a schematic perspective view of a cell stack. The cell stack 5 comprises a plurality of battery cells 6 arranged in a stack extending in an X axis, wherein said X axis is at least substantially parallel with the first and the second interior surfaces 3, 4 of the cell stack room 2.

The battery cells 6 are for example, re-chargeable lithium-ion (Li-ion) battery cells or solid-state battery cells. The battery cells 6 may all have the same shape, electrochemistry, and dimensions. In one embodiment, the battery cell 6 has a prismatic shape. In one embodiment, the battery cell 6 is a pouch cell.

The battery cell 6 comprises at least one battery cell terminal that typically may be located on a top face and/or on bottom face of the battery cell.

In one embodiment, the cell stack 5 comprises cell pads 8 between the battery cells **6.** In one embodiment, the cell pad 8 has a soft elastic structure. The cell pads 8 are made of, for example, of polyurethane (PU), silicon foam or polyethylene (PE).

The cell pads 8 may provide cell swelling space between the battery cells during lifetime, which may be required by some types of battery cells because they may tend to swell with age or raising temperature. They may also make the cell stack 5 compressible and allow space for tolerance management when assembling the cell stacks into the cell stack room **2.**

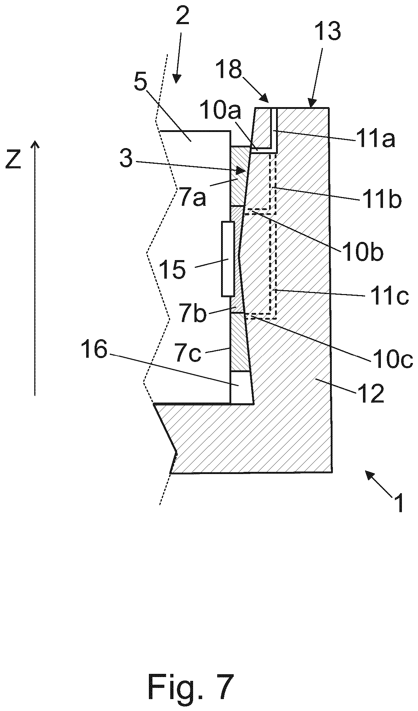

The cell stack 5 may comprise further parts and components, such as end spacers arranged the ends of the cell stack, a cell stack frame (such as shown in Figure 7) that is arranged for holding the cell stack together, etc. However, in one embodiment, the cell stack 5 is devoid of the cell stack frame. Thus, the cell stack room 2 carries the cell stack 5 and forces caused by cell stack, e.g., caused by battery cell dimension changes that result from temperature changes or cell ageing.

In one embodiment, the bottoms of the battery cells 6 are in a direct or an indirect contact with a cooling element 14 arranged under the cell stack(s) 5. In one embodiment, there is a layer of heat conductive material, **i.e.,** a thermal interface material (TIM), such as heat paste or a thermal pad, between the bottom of the battery cell and the cooling element. TIM is used to dissipate and improve the transfer of heat out of the battery stack.

In one embodiment, the TIM between the bottom of the battery cell and the cooling element is soft elastically or non-elastically pliable material that prevents or at least reduces pressure or forces caused by the cell stack to be transmitted to the cooling element 14. Said pressure or forces may be caused by, e.g., thermal expansions of the battery cells.

In one embodiment, the TIM between the bottom of the battery cell and the cooling element attach the cell stack to the bottom of the cell stack room. In another embodiment, the TIM does not attach the cell stack to the bottom of the cell stack room but is just in contact therewith. Then, the cell stack can be easily removed from the cell stack room by just cutting the adhesive layers 7 between the cell stack and the interior surfaces. This enables, for instance, removing and replacing faulty cell stack.

In one embodiment, the cooling element 14 arranged under the cell stack(s) 5 is the main cooling element of said cell stack(s). In one embodiment, the cooling of said cell stack(s) takes place at least mainly, or even exclusively, through the bottom of the battery cells.

The direction of the X axis may be chosen freely in relation to the main direction of the device, such as a vehicle, such as an electric car or a hybrid car. The main direction of a vehicle is typically parallel with the direction of travel of said vehicle. In one embodiment, the X axis is parallel with the main direction. In another embodiment, the X axis is perpendicular to the main direction.

**Figure** 4 is a schematic view of a part of a battery pack in partial cross-section. The housing 1 may comprise one or more partition walls or fins 9 between the cell stacks 5. The fin 9 provides the first interior surface 3 on its first side and, respectfully, the second interior surface 4 on its second side. Additionally, the fins may provide support and stiffness for the battery pack, as well as serve as a mounting element for various elements of the battery pack. The cell stack 5 is placed in the cell stack room 2 and its side surfaces are attached by an adhesive layer 7 to the first interior surface and the second interior surface in said cell stack room. It is to be noted that Figure 4 is showing the adhesive layer 7 only between the cell stack 5 and the second interior surface **4.**

In one embodiment, the adhesive layer 7 comprises epoxy.

In one embodiment, the adhesive layer 7 comprises polyurethane, such as two-component polyurethane.

In one embodiment, the adhesive layer 7 comprises methyl methacrylate.

In one embodiment, the adhesive layer 7 comprises silicone.

In one embodiment, the adhesive layer 7 comprises

In one embodiment, the tensile strength of the adhesive material is at least 0,5 MPa, preferably at least 0,8 MPa, more preferably at least 1,0 MPa.

In one embodiment, the shear strength of the adhesive material is at least 1,0 MPa.

In one embodiment, the viscosity of the adhesive material in its dispensing phase is in range of 1 - 6 Pa s.

In one embodiment, the dielectric strength of hardened adhesive material is at least 4 kV/mm.

In one embodiment, the dielectric strength of hardened adhesive material is at least 15 kV/mm, preferably at least 20 kV/mm.

The adhesive material is preferably dispensed in a flowable form between the cell stack 5 and the corresponding interior surface **3, 4.** In other words, the cell stack 5 is placed in the cell stack room 2 in a first step, and the adhesive material is dispensed in a following step. Then, the adhesive material is allowed to harden or solidify.

In one embodiment, the adhesive material is heated above room temperature so that its viscosity lowers enabling higher flow rates and quicker dispensing process. High temperature may also quicken hardening of the adhesive material. The amount of the adhesive material and the height or volume of the adhesive layer 7 between the cell stack 5 and the interior surface 3, 4 is selected so that objectives, such as a sufficient attachment, set to the adhesive layer 7 are reached.

In one embodiment, such as shown in Figure 4, the height of the adhesive layer 7 at least substantially corresponds to the height of the cell stack 5. The adhesive layer 7 extends from the very bottom of the cell stack room 2 towards the edge 13 of the fin. In one embodiment, the adhesive layer 7 does not extend to the bottom of the cell stack room; instead, there may be a space 16 devoid of the adhesive layer. In one embodiment, this space 16 may be an empty space , such as shown in Figure 7. In other words, the adhesive layer 7 needs not to fill completely the gap 20 between the cell stack and the opposing interior surface 3, 4. This makes it possible to save the amount of material and weight of the adhesive layer. In one embodiment, the space 16 is at least partially filled with a paste that is arranged under the cell stack and flown in the space 16 when the cell stack has been installed in the cell stack room 2.

In one embodiment, the adhesive layer 7 does not extend close to the top of the cell stack, but there is a substantial empty space above the adhesive layer 7. There may be an empty space also at the opposite end of the gap 20, i.e., at the end close to the edge 13.

The adhesive layers 7 may further be configured to receive swelling forces of the battery cells and transfer them to the fins 9 and the housing 1. Thus, the housing may control cell stack dimensions and battery cell internal swelling forces during the lifetime, support the cell stack, protect the battery cells from external forces, and improve the resistance against twisting, torsion and/or heavy impacts. In other words, the housing may act as a rigid support structure of the cell stacks and there may be no need for a separate rigid battery cell stack frame around the cell stack.

In one embodiment, the interior surface 3, 4 is parallel to the corresponding side surface of the cell stack that is facing the interior surface. Then there is a gap between the interior surface and the cell stack. The adhesive layer is arranged in said gap.

In one embodiment, at least one of the first and the second interior surfaces 3, 4 comprises a draft angle D such that distance of said at least one of the first and second interior surfaces 3, 4 increases along the Z axis towards the edge of the fin 9. In one embodiment, such as shown in Figure 4, both the first and the second interior surfaces 3, 4 comprise the draft angle D. The draft angle D of the first interior surface 3 may be same as in the second interior surface 4, but not necessary.

In one embodiment, the draft angle D is at least 1°.

In one embodiment, there is no draft angle in at least one of the interior surfaces 3, 4. In one embodiment, both the interior surfaces 3, 4 are devoid of the draft angle and the distance between the first and second interior surfaces 3, 4 is at least essentially constant along the Z axis.

In one embodiment, one the interior surfaces 3, 4 is devoid of the draft angle whereas another of the interior surfaces has the draft angle D, and thus the distance of the first and second interior surfaces 3, 4 increases along the Z axis.

In one embodiment, the battery cells 6 are solely cooled by a cooling element 14 that is arranged in the bottom of the cell stack room 2. In this embodiment, heat generated in the battery cells 6 is conducted through the bottoms of the battery cells to the cooling element 14. The fins 9 or the adhesive layer 7 are not serving in cooling of the battery cells 6, or their importance in said cooling is insignificant. The adhesive layer 7 may thus serve primarily or solely in attaching the cell stack 5 to the fins. Therefore, the properties of the adhesive material and the adhesive layer 7 may be optimized in said attaching purpose, leaving aside the cooling function.

In one embodiment, the fins 9 and the adhesive layer 7 are serving as a cooling route for conducting heat away from the battery cells 6. In this embodiment, the adhesive material may be selected or mixed with suitable blend components such that it has a decent heat conducting ability.

In one embodiment, the battery cells 6 are cooled through the bottom and the sides thereof, e.g., through the fins 9 and the adhesive layer 7 and the bottom of the cell stack room.

It is to be noted herein that the first interior surface 3 or the second interior surface 4 may be arranged not only in the fin but also in another structure of the battery pack. Thus, the adhesive layer 7 may attach the cell stack 5 to said another structure, respectively. One example of this embodiment is shown in Figure 7.

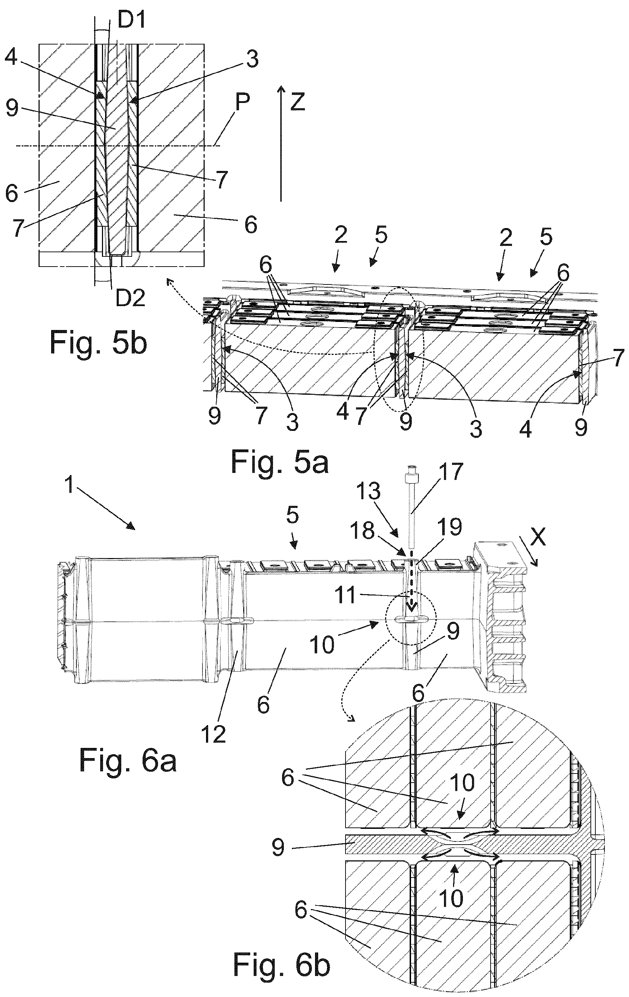

**Figure 5a** is a schematic perspective view of a part of a battery pack in partial cross-section, and **Figure 5b** is a schematic side view of a detail of the battery pack shown in Figure 5a in partial cross-section.

In one embodiment, at least one of the first and the second interior surfaces 3, 4 comprises two draft angles D1, D2. The embodiment shown in Figures 5a, 5b has two draft angles D1, D2 in both the first and the second interior surfaces 3, 4. The effect of the two draft angles D1, D2 is that distance of the first and second interior surfaces 3, 4 increases from the middle of the height of the interior surfaces 3, 4, i.e., in line with the Z axis, towards both ends of said interior surfaces. The term "middle of the height of the interior surface" covers not only the exact middle point of the height, but about 50 % of the height around said middle point.

In one embodiment, the fins 9 and certain parts of the housing 1 are manufactured by a casting method, such as by die casting. A division plane P of mold parts needed in the casting may be arranged at the middle of the height of the interior surfaces 3, 4 and then the two draft angles D1, D2 may be arranged to begin from the division plane P and extend towards the ends of the first and the second interior surfaces such that distance of the first and second interior surfaces 3, 4 increases along the Z axis towards both edges of the first and the second interior surfaces. It is to be noted, however, that the two draft angles D1, D2 may also be present in the housing even if the the fins 9 are not manufactured by the casting method.

In one embodiment, such as shown in Figures 5a, 5b, the two draft angles D1, D2 are at least substantially equal. In another embodiment, the angles may substantially differ from each other.

**Figure 6a** is a schematic side view of a part of a battery pack in partial cross-section, and **Figure 6b** is a schematic perspective view of a detail of the battery pack shown in Figure 6a in partial cross-section.

In one embodiment, the fin 9 is provided with a hole 11 that extends from an orifice 18 arranged to one edge 13 of the fin towards another edge thereof. In the embodiment shown in Figure 6a, said edge 13 is positioned on the upper side of the housing. In one embodiment, the hole 11 is connected to a lateral aperture 10 that is open to the cell stack room 2 limited by said fin 9.

In one embodiment, the hole 11 is connected to at least one aperture 10 arranged in one of the interior surfaces 3, 4.

In other words, the first interior surface 3 or the second interior surface 4 is provided with the aperture 10 that is connected to the hole 11 extending to the edge 13 of a structure creating the corresponding interior surface 3, 4.

In another embodiment, such as shown in Figures 6a, 6b, the hole 11 is connected to at least two apertures 10 that are arranged in two interior surfaces 3, 4 on both sides of the fin 9. Thus, there is a flow channel from the orifice 18 to two cell stack rooms 2. In the embodiment shown in Figure 6a, the hole 11 is provided with two apertures 10 that extend to the cell stack rooms 2 arranged on both sides of the fin 9. Thus, there is a flow channel from the orifice 18 to two cell stack rooms 2.

It is to be noted that the hole 11 and the aperture 10 may be arranged to any structure 12 that constitutes at least one of the first interior surface 3 and the second interior surface 4, not only to the fins separating two adjacent cell stack rooms 2.

Typically, there is a series of holes 11 and apertures 10 arranged along the fin or any structure 12 constituting at least one of the first and the second interior surface 3, 4, i.e., the series of holes is extending in direction of X axis.

In one embodiment, the holes 11, or at least some of them, are screw holes, i.e., they comprise screw threads. These screw holes may be used in assembling the battery pack 100, e.g., fastening a cover element of the battery pack to the housing 1, etc. The screw hole is configured to receive a fixing device, such as a screw, a grub screw, etc.

In one embodiment, the screw hole is arranged in a screw tower 19 that may be higher than the rest of the edge 13 and that, if arranged in a fin 9, may have a thicker structure than the rest of the fin.

In one embodiment, the adhesive material that will create the adhesive layer 7 in the cell stack room 2 is dispensed by a dispenser 17 that feeds the adhesive material through the hole 11 and the aperture(s) 10 into the respective cell stack room(s) 2, more specifically to a gap 20 (shown in Figure 4) between the cell stack 5 and the respective interior surface 3, 4.

In one embodiment, the dispenser 17 comprises multiple feed channels such that all the holes 11 connected to the same gap 20 can be fed simultaneously.

In another embodiment, the adhesive material is dispensed directly to the gap 20 between the cell stack and the interior surface 3, 4, as shown in Figure 4.

Figure 7 is a schematic view of a part of a battery pack in partial cross-section. The cell stack room 2 shown in the Figure lies on one side of a housing 1. Thus, the first interior surface 3 shown in the Figure is not in a fin but in another structure 12 of the housing. Said another structure 12 may be, e.g., an outer wall of the housing 1.

In one embodiment, the adhesive layer 7 comprises plurality of layers or component layers of different materials arranged one on top of the other or sequentially along the Z axis that extends through the height of the cell stack 5. In the embodiment shown in Figure 7, the adhesive layer 7 comprises three component layers 7a-7c made of different materials. In one embodiment, the first 7a and the third 7c component layers are of the same material, but the second component layer 7b between the first and the third component layer is made of different material. In one embodiment, at least one of the component layers comprises material that conducts heat from the cell stack 5 to the interior surface 3, 4. Said material may be, e.g., heat paste and/or material comprising heat conductive particles or fibers mixed in a matrix material. The matrix material may be, e.g., adhesive material. For instance, in case of the embodiment shown in Figure 7, the first 7a and the third 7c component layers may be arranged to conduct heat from the cell stack 5 to the first interior surface 3, whereas the second component layer 7b functions as an adhesive layer that attaches the cell stack 5 to the interior surface 3 but does not conduct heat, at least not in a significant extent.

It is to be noted that the number of the component layers as well as their material, volume or height are selected based on, e.g., the requirements given to the adhesive layer 7 and economic aspects.

In one embodiment, there are apertures 10 arranged in multiple levels in the direction of Z axis and corresponding holes 10 in the structure 12 or the fin 9. In the embodiment shown in Figure 7, there are apertures 10a-10c arranged in three levels. The first aperture 10a is arranged closest to the edge of the structure, and the second 10b and the third 10c apertures to a second and a third level, respectively, farer from said edge 13. In one embodiment, the apertures 10a-10c in multiple levels are used for dispensing component layers that constitute a layered adhesive layer, such as shown in Figure 7. For instance, in this embodiment, the material making the first component layer 7a is dispensed through the first aperture 10a, the material making the second component layer 7b through the second aperture 10b and the material making the third component layer 7c through the third aperture 10c. The materials may be dispensed at least partly simultaneously or sequentially. In the latter, the previous material dispensed in the gap may be allowed to harden before the next material will be dispensed, but this is not always necessary.

In one embodiment where apertures 10 are arranged at multiple levels, the entire adhesive layer 7 is of the same material, i.e., it does not have a layered structure of different materials, the same adhesive material is dispensed through all the apertures. This may quicken the dispensing process.

In one embodiment, the cell stack 5 is provided with a cell stack frame 15. This frame is arranged for carrying the battery cells 6 and controlling cell swelling forces, for instance. The cell stack 5 may also simplify disposing of the cell stack 5 into the cell stack room **2.**

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

The embodiments described hereinbefore may be used in any combination with each other. Several of the embodiments may be combined together to form a further embodiment. A product, a process, or a use, disclosed herein, may comprise at least one of the embodiments described hereinbefore. It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. The term "comprising" is used in this specification to mean including the feature (s) or act(s) followed thereafter, without excluding the presence of one or more additional features or acts.

### REFERENCE SYMBOLS

- 1: housing
- 2: cell stack room
- 3: first interior surface
- 4: second interior surface
- 5: cell stack
- 6: battery cell
- 7: adhesive layer
- 8: cell pad
- 9: fin
- 10: aperture
- 11: hole
- 12: structure
- 13: edge
- 14: cooling element
- 15: cell stack frame
- 16: space
- 17: dispenser
- 18: orifice
- 19: screw tower
- 20: gap

- 100: battery pack

- D: draft angle
- P: division plane

## Claims

1. A battery pack, comprising
- a housing (1), providing
- a cell stack room (2) having a first interior surface (3) and a second interior surface (4) opposite the first interior surface,
- a cell stack (5) arranged in the cell stack room (2) between the first and the second interior surfaces (3, 4), the cell stack (5) comprising
- a plurality of battery cells (6) arranged in a stack extending in an X axis,
- the X axis is at least substantially parallel with the first and the second interior surfaces (3, 4), wherein
- the cell stack (5) is attached by an adhesive layer (7) to the first interior surface and the second interior surface.

2. The battery pack as claimed in claim **1,** wherein
- the battery cell (6) has a prismatic shape.

3. The battery pack as claimed in claim **1,** wherein
- the battery cell (6) is a pouch cell.

4. The battery pack as claimed in any one of the preceding claims, wherein
- the cell stack (5) comprises cell pads (8) arranged alternatively with the battery cells (6).

5. The battery pack as claimed in any one of the preceding claims, wherein
- the cell stack room (2) is arranged for carrying the battery cells and controlling cell swelling forces.

6. The battery pack as claimed in any one of claims 1 **- 3,** wherein
- the cell stack (5) is provided with a cell stack frame (15) arranged for carrying the battery cells and controlling cell swelling forces.

7. The battery pack as claimed in any one of the preceding claims, wherein
- the adhesive layer (7) comprises at least one of the following adhesives: epoxy, polyurethane, such as two-component polyurethane, methyl methacrylate, and silicone.

8. The battery pack as claimed in any one of the preceding claims, wherein
- the tensile strength of the adhesive material is at least 0,5 MPa, preferably at least 0,8 MPa, more preferably at least 1,0 MPa.

9. The battery pack as claimed in any one of the preceding claims, wherein
- the adhesive layer (7) comprises plurality of layers of different materials along a Z axis that extends through the height of the cell stack (5).

10. The battery pack as claimed in any one of the preceding claims, wherein
- the housing (1) comprises a plurality of parallelly arranged cell stack rooms (2), and a fin (9) arranged between two cell stack rooms (2).

11. The battery pack as claimed in claim 10, wherein
- at least one of the first interior surface (3) and the second interior surface (4) is provided with an aperture (10) that is connected to a hole (11) extending to one edge (13) of a structure (12) creating the corresponding interior surface (3, 4).

12. The battery pack as claimed in claim 11, wherein
- the hole (11) comprises a screw thread.

13. The battery pack as claimed in any one of the preceding claims, wherein
- the first and the second interior surface (3, 4) comprise a draft angle (D) such that distance of said first and second interior surfaces (3, 4) increases along the Z axis.

14. The battery pack as claimed in claim 13, wherein
- at least one of the first and the second interior surfaces (3, 4) comprise two draft angles (D1, D2) such that distance of said first and second interior surfaces increases from the middle of the height of said interior surfaces (3, 4) towards both ends of said interior surfaces.

15. The battery pack as claimed in any one of the preceding claims, wherein
- the bottom of the battery cell (6) is in contact with a cooling element (14) arranged under the cell stack(s) (5).
